# EUROPEAN PATENT SPECIFICATION

(11) **EP 3 063 109 B1**
(45) Date of publication and mention of the grant of the patent: **30.09.2020**
(21) Application number: 14761465.5
(22) Date of filing: 19.08.2014
(51) Int. Cl.: C04B 41/89, F01D 5/28

(54) **METHODS OF MANUFACTURING SILICA-FORMING ARTICLES HAVING ENGINEERED SURFACES TO ENHANCE RESISTANCE TO CREEP SLIDING UNDER HIGH-TEMPERATURE LOADING**
VERFAHREN ZUR HERSTELLUNG VON SILICA-FORMARTIKELN MIT MODIFIZIERTEN OBERFLÄCHEN ZUR VERBESSERUNG DER BESTÄNDIGKEIT GEGENÜBER KRIECHGLEITEN UNTER HOHER TEMPERATURBELASTUNG
PROCÉDÉS DE FABRICATION D'ARTICLES À FORMATION DE SILICE AYANT DES SURFACES TECHNIQUEMENT ÉTUDIÉES POUR RENFORCER LA RÉSISTANCE AU GLISSEMENT FLUAGE SOUS DES CHARGES À HAUTE TEMPÉRATURE

(30) Priority: 31.10.2013 US 201314068840
(43) Date of publication of application: 07.09.2016
(73) Proprietor: General Electric Company, Schenectady, NY 12345 (US)
(72) Inventor: LIPKIN, Don Mark, Niskayuna, NY 12309 (US); JOHNSON, Curtis Alan, Niskayuna, NY 12309 (US); MARGOLIES, Joshua Lee, Niskayuna, NY 12309 (US); ROSENZWEIG, Larry Steven, Niskayuna, NY 12309 (US); WAN, Julin, Niskayuna, NY 12309 (US)
(74) Representative: Openshaw & Co.
(86) International application number: PCT/US2014/051587
(87) International publication number: WO 2015/065573

(56) References cited:
- WO-A1-2012/122373
- WO-A1-2014/092916

## Description

### GOVERNMENT INTEREST

The present technology was developed with Government support under Contract No. DE-FC26-05NT42643 awarded by the Department of Energy. The Government may have certain rights in the claimed inventions.

### BACKGROUND OF THE TECHNOLOGY

The present technology generally relates to coating systems and methods suitable for protecting components exposed to high-temperature environments, such as the hostile thermal environment of a turbine engine. More particularly, this technology is directed to an Environmental Barrier Coating (EBC) on a silicon-containing region of a component and to the incorporation of surface features in the silicon-containing region to inhibit creep displacement of the EBC when subjected to shear loading at elevated temperatures.

Higher operating temperatures for turbine engines are continuously sought in order to increase their efficiency. Though significant advances in high temperature capabilities have been achieved through formulation of iron, nickel and cobalt-base superalloys, alternative materials have been investigated. Ceramic composite materials are currently being considered for such high temperature applications as combustor liners, vanes, shrouds, blades, and other hot section components of turbine engines. Some examples of ceramic composite materials include silicon-based composites, for example, composite materials in which silicon, silicon carbide (SiC), silicon nitride (Si₃N₄), and/or a silicide serves as a reinforcement phase and/or a matrix phase.

In many high temperature applications, a protective coating is beneficial or required for a Si-containing material. Such coatings should provide environmental protection by inhibiting the major mechanism for degradation of Si-containing materials in a water-containing environment, namely, the formation of volatile silicon hydroxide (for example, Si(OH)₄) products. A coating system having these functions will be referred to below as an environmental barrier coating (EBC) system. Desirable properties for the coating material include a coefficient of thermal expansion (CTE) compatible with the Si-containing substrate material, low permeability for oxidants, low thermal conductivity, stability and chemical compatibility with the Si-containing material.

The silicon content of a silicon-containing bondcoat reacts with oxygen at high temperatures to form predominantly an amorphous silica (SiO₂) scale, though a fraction of the oxide product may be crystalline silica or oxides of other constituents of the bondcoat and/or EBC. The amorphous silica product exhibits low oxygen permeability. As a result, along with the silicon-containing bondcoat, the silica product that thermally grows on the bondcoat is able to form a protective barrier layer.

The amorphous silica product that forms on a silicon-containing bondcoat in service has a relatively low viscosity and consequently a high creep rate under shear loading. High shear loads (e.g. from about 0.1 to 10 MPa) can be imposed by g forces (e.g. from about 10,000 to about 100,000 g's) resulting from high-frequency rotation of moving parts, such as blades (buckets) of turbine engines. Such shear loading may cause creep displacements of the EBC relative to the bondcoat and substrate which can result in severe EBC damage and loss of EBC protection of the underlying substrate. WO2012/122373 relates to a system including a black track or a blade shroud and a gas turbine shroud that includes a blade tip, the black track or blade shroud including a substrate and an abradable layer formed over the substrate.
WO 2014/092916 relates to an article that includes a silicon-containing region including surface features on a surface thereof. The surface features include depressions, protuberances, or combinations thereof.

### BRIEF DESCRIPTION OF THE TECHNOLOGY

The present technology provides an environmental barrier coating (EBC) system and a method of fabricating the EBC system on an article formed of a silicon-containing material, such as a ceramic matrix composite (CMC) in which a silicon-containing material serves as a reinforcement phase and/or a matrix phase. The EBC system and method are particularly well suited for protecting silicon-containing articles exposed to high temperatures, including the hostile thermal environment of a turbine engine. The invention is as defined in the accompanying claims, while the following description includes embodiments which are according to the invention and also embodiments which are not according to the invention.

According to one example of the technology, a method of forming an article comprises forming a silicon-containing layer on a silicon-containing region of a surface of a substrate of the article; forming a plurality of channels and ridges in the silicon-containing layer; and forming at least one outer layer overlying the surface of the silicon-containing region, wherein the plurality of channels and ridges are formed by adding silicon-containing material to the silicon-containing layer. According to another example of the technology, the channels and ridges are formed by subtracting material from the silicon-containing layer. According to yet another example of the technology, the channels and ridges are formed by forming channels or grooves in the silicon-containing region of the surface of the substrate prior to formation of the silicon-containing layer.

By interlocking the silicon-containing region with an initial layer of the environmental barrier coating system, displacement of the EBC attributable to creep of the constituent layer, for example, a silica layer that thermally grows on the silicon-containing layer or region, can be substantially inhibited, thereby promoting the structural integrity of the environmental barrier coating system and its ability to protect the article in high temperature applications. The technology is applicable to use with known environmental barrier coating materials and the interlocking features can be produced using various processes.

### BRIEF DESCRIPTION OF THE DRAWINGS

These and other features, aspects, and advantages of the present technology will become better understood when the following detailed description is read with reference to the accompanying drawings in which like characters represent like parts throughout the drawings, wherein:
FIG. 1 schematically depicts an article or component that may be coated with coatings of the present technology and according to methods of the present technology;
FIG. 2 schematically depicts a section of the article or component of FIG. 1 including a coating according to an example of the present technology;
FIGS. 3-3B schematically depict engineered surfaces of a bondcoat of the article or component according to examples of the present technology;
FIG.4 schematically depicts a process for forming engineered surfaces according to an example of the present technology;
FIG. 5 schematically depicts a process for forming engineered surfaces according to an example of the present technology;
FIG. 6 schematically depicts a process a forming engineered surfaces according to an example of the present technology;
FIG. 7 schematically depicts an arrangement for forming engineered surfaces according to the present technology;
FIG. 8 schematically depicts an arrangement for forming engineered surfaces according to the present technology; and
FIGS. 9-20 are photographs of engineered surfaces formed according to the present technology.

### DETAILED DESCRIPTION

The present technology is generally applicable to components that operate within environments characterized by relatively high temperatures, stresses, and oxidation. Notable examples of such components include high and low pressure turbine vanes (nozzles) and blades (buckets), though the technology has application to other components.

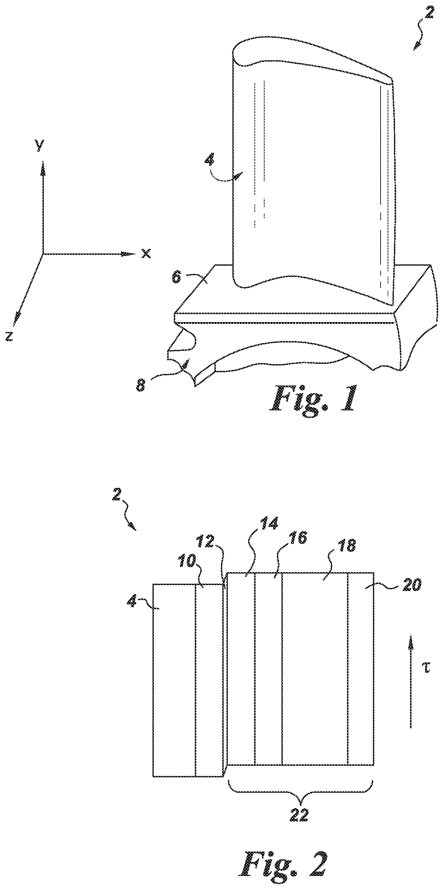

Referring to FIGS. 1 and 2, an article or component 2, for example a turbine bucket or blade, may include an Environmental Barrier Coating (EBC) system 22 to protect the article or component when operated in a high-temperature, chemically reactive environment. The component 2 may include a substrate 4, for example an airfoil section, extending from a platform 6. The platform 6 may include a mounting and securing structure 8 configured to mount and secure the component to a rotating element, such as a rotor (not shown). The substrate 4 may include a silicon containing region. Examples of silicon-containing materials include those with a silicon carbide, silicon nitride, a silicide (for example, a refractory metal or transition metal silicide, including, but not limited to, for example Mo, Nb, or W silicides) and/or silicon as a matrix or second phase. Further examples include ceramic matrix composites (CMC) that contain silicon carbide as the reinforcement and/or matrix phase.

The EBC system 22 of FIG. 2 represents one of a variety of different EBC systems shown as being directly applied to a surface of the substrate 4. A silicon-containing bondcoat is disclosed in, for example, U.S. 6,299,988. The bondcoat 10 is further represented as bonding a first, or initial, EBC layer 14 to the substrate 4, and optionally at least one additional layer 16, 18, 20 of the EBC system 22. The EBC system 22 provides environmental protection to the underlying substrate 4. It may also reduce the operating temperature of the component 2, thereby enabling the component 2 to operate at higher gas temperatures than otherwise possible. While FIG. 2 represents the component 2 as including the silicon-containing bondcoat 10, in which case the first EBC layer 14 is deposited directly on a silicon-containing surface region formed by the bondcoat 10, the technology is also applicable to a component 2 that does not include a bondcoat 10 as described herein, in which case the first EBC layer 14 may be deposited directly on a silicon-containing surface region formed by the substrate 4. It should be appreciated that a constituent layer 12, or a portion of the constituent layer 12, described in more detail below, may be present prior to application of the first EBC layer 14.

Degradation of a silicon-containing material in a combustion environment results in reaction with water vapor to form volatile silicon hydroxide (for example, Si(OH)₄) products. The EBC system 22 may serve to resist recession by chemical reaction of the bondcoat 10 and/or substrate 4 with water vapor, provide a temperature gradient to reduce the operating temperature of the component 2, or both. Suitable EBC systems usable with the present technology include, but are not limited to, those disclosed in, for example, U.S. 6,296,941 and U.S. 6,410,148. The EBC system 22 may perform a multitude of sealing, reaction barrier, recession resistance, and/or thermal barrier functions.

As noted above, each of the bondcoat 10 and substrate 4 may define a surface region of the component 2 that contains silicon. For example, the bondcoat 10 may comprise or consist essentially of elemental silicon. Alternatively, the bondcoat 10 may contain silicon carbide, silicon nitride, metal silicides, elemental silicon, silicon alloys, or mixtures thereof. Bondcoat 10 may further contain oxide phases, such as silica, rare earth silicates, rare earth aluminosilicates, and/or alkaline earth aluminosilicates. The use of silicon-containing compositions for the bondcoat 10 improves oxidation resistance of the substrate 4 and enhances bonding between the substrate 4 and first EBC layer 14. The silicon of the bondcoat 10 reacts with oxygen at elevated temperatures to thermally grow the constituent layer 12 of predominantly amorphous silica (SiO₂) on its surface, as schematically represented in FIG. 2. The resulting thermally grown oxide of amorphous silica exhibits low oxygen permeability. As a result, along with the silicon-containing bondcoat 10, the constituent layer 12 is able to deter permeation of oxygen into the bondcoat 10 and substrate 4. During growth of the constituent layer 12, some of the amorphous silica may crystallize into crystalline silica and additional impurity elements and second phases can be incorporated therein.

In the absence of the silicon-containing bondcoat 10, the first layer 14 of the EBC system 22 can be deposited directly on a silicon-containing surface region of the component 2 defined by the substrate 4, in which case the substrate 4 is formed to have a composition whose silicon content is sufficient to react with oxygen at elevated temperatures and form a silica-rich constituent layer 12 described above. Furthermore, depending on the composition of the substrate 4, this layer may be a predominantly amorphous silica product, a silica-rich glass, or a multi-phase mixture wherein at least one of the phases is silica-rich. As a matter of convenience, the remaining disclosure will make reference to embodiments that include the bondcoat 10 as represented in FIG. 2, though the disclosure should be understood to equally apply to a constituent layer 12 that forms on the surface of the substrate 4.

The constituent layer 12 that forms on the silicon-containing bondcoat 10 or another silicon-containing surface region, such as the substrate 4, during high temperature service may grow to thicknesses of up to about 50 µm or more, depending on the application. The constituent layer 12 may have a relatively low viscosity and consequently a high creep rate under shear loading τ that can be imposed by g forces that occur during rotation of components, such as blades (buckets) of turbine engines. As a result of creep of the constituent layer 12, displacements of the overlying EBC system 22 relative to the substrate 4 can exceed 100 mm over 25,000 hours service at about 1315°C (about 2400°F). Such large creep displacements can result in severe damage to the EBC system 22 and direct loss of environmental protection of the underlying substrate 4.

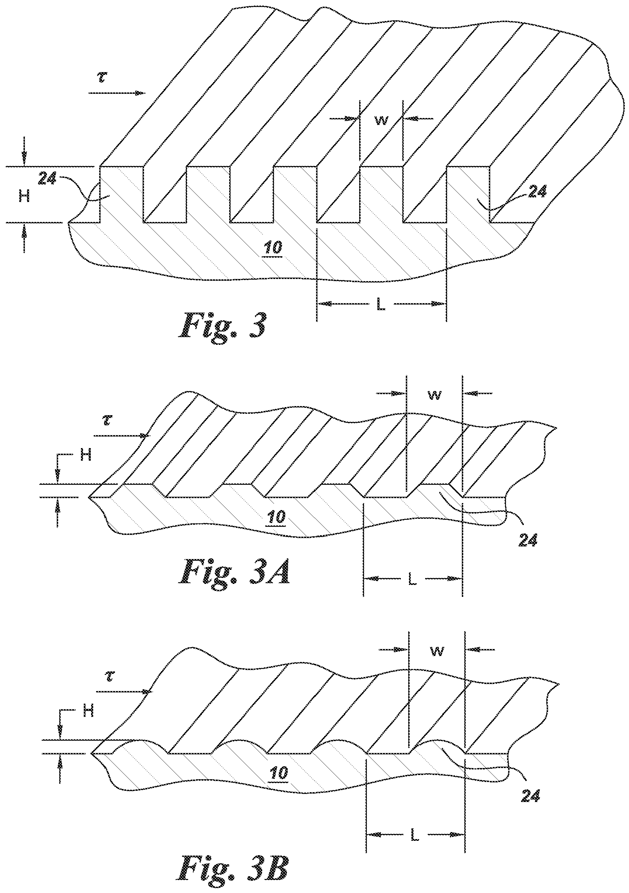

Referring to FIG. 3, creep of the constituent layer 12 that forms on the silicon-containing bondcoat 10 (or, in the absence of the bondcoat 10, on the surface of the substrate 4) may be inhibited by providing the surface of the bondcoat 10 with engineered surfaces or features 24 configured to mitigate creep of the constituent layer 12. As shown in FIG. 3, the surface features may take the form of ridges 24 as described in co-pending, commonly assigned U.S. US2015/118443 A, entitled "SILICA-FORMING ARTICLES HAVING ENGINEERED SURFACES TO ENHANCE RESISTANCE TO CREEP SLIDING UNDER HIGH-TEMPERATURE LOADING". The ridges 24 may have a wavelength L and a span W that defines a ratio α (W/Lthat may be from about 0.1 to 0.9, for example about 0.2 to 0.8, for example about 0.4 to 0.6. Although the ridges 24 are shown as being generally square in cross section and extending substantially perpendicular to the shear loading direction (i.e. in a substantially chordwise direction), it should be appreciated that the engineered surfaces, i.e. ridges 24, may have other cross sectional shapes, e.g. rectangular, trapezoidal, or any generally sinusoidal or wavy-shaped configuration. It should also be appreciated that although the examples show the surfaces 24 perpendicular to the shear stress, the surfaces 24 may be provided at an angle to the shear loading direction, e.g. up to about 45° to the shear loading direction. It should also be appreciated that although the engineered surfaces are shown as periodic and continuous, the surfaces may be non-periodic and/or non-continuous. It should further be appreciated that the engineered surfaces may be provided as sets of intersecting surfaces, e.g. diamond shapes formed, by example. Referring to FIG. 3A, the engineered surfaces 24 may have a generally trapezoidal shape. Referring to FIG. 3B, the engineered surfaces 24may have a generally wavy or wave-like shape.

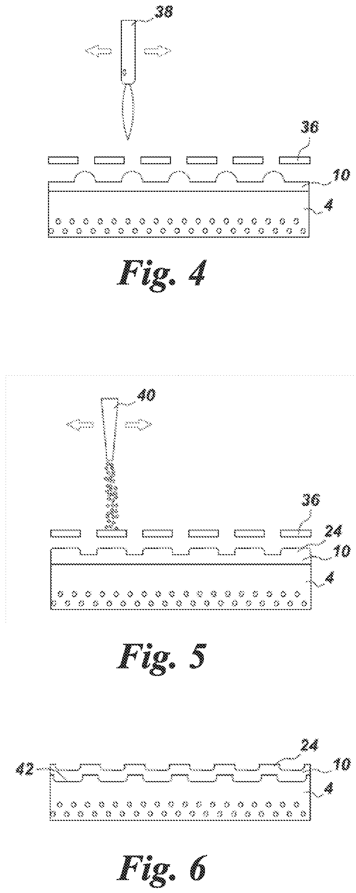

Referring to FIG. 4, the engineered surfaces, e.g. ridges 24, may be formed by an additive process to selectively add material to define the ridges 24 that are separated by groove valleys 25. A thermal spray, e.g. an air plasma spray (APS) device 38, is configured to spray material 43 (e.g. Si) for forming the bondcoat 10 through a patterned mask 36 having apertures or slots 44 that define the position of the ridges 24 on the substrate 4. The APS device 38 is configured to move over the mask 36, as shown by the arrows, to form the ridges on the bondcoat 10. Alternatively, the ridges 24 may be formed by an additive process including spraying the material of the ridges 24 (e.g. Si) using a direct-write torch. It should be appreciated that any thermal spray process may be used, including for example, air plasma spray; plasma, incuding laser produced plasma, atmospheric or low pressure or vacuum plasma; HVOF; cold spray; combustion; or kinetic.

Referring to FIG. 5, the engineered surfaces 24 may be formed by a subtractive process. A grit blasting device 40 may blast particles 46 through the apertures 44 of a patterned mask 36 to form groove valleys 25 thus forming the ridges 24. The particles 46 may be, for example, SiC or alumina (Al₂O₃) particles. The grit blast device 40 may move, for example as shown by the arrows, across the patterned mask 36 to form the ridges 24 on the bondcoat 10. Alternatively, the groove valleys 25 may be formed by another subtractive process, for example laser machining or using a micro-waterjet to machine the grooves 25.

Referring to FIG. 6, the substrate 4 may be patterned to include engineered surfaces 27 so that upon application of the bondcoat 10, the engineered surfaces 24 of the bondcoat 10 are formed corresponding to the engineered surfaces 27 of the substrate 4. The engineered surfaces 27 of the substrate 4 may be provided by forming grooves 42 in the substrate. The grooves 42 may conform to the shape of the part and be continuous and substantially perpendicular to the shear loading direction, or at an angle up to about 45° to the shear loading direction. The engineered surfaces 24 of the bondcoat 10 may also be formed or partially formed by any of the processes described above with respect to FIGS. 4 and 5. The bondcoat 10 may be provided to the substrate by, for example, CVD, or any other suitable process.

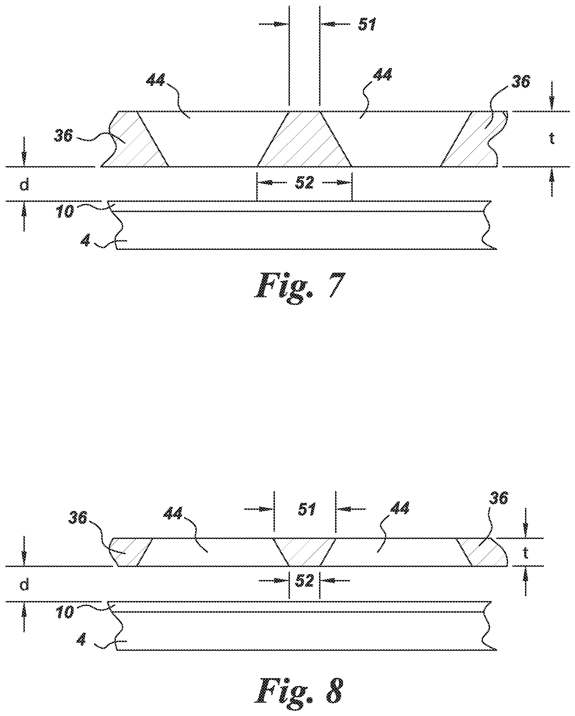

Referring to FIGS. 7 and 8, in the formation of the engineered surfaces by subtractive methods, e.g. grit blasting or micro-waterjet machining, or additive methods, e.g. APS, the mask 36 may be spaced a distance d from the substrate 4 and/or bondcoat 10 of about 5 mils (.127 mm) or less and the mask 36 may have a thickness of between about 60 to 120 mils (1.5 to 3 mm). The slots 44 in the mask 36 may be tapered and have a nominal width of about 20 mils (.5 mm). As shown in FIG. 7 the mask 36 may be positioned so that the slots 44 converge toward the substrate 4 and bondcoat 10 for application of the engineered surfaces 24 through the additive process. Alternatively, as shown in FIG. 8 the mask 36 may be positioned so that the slots 44 of the mask 36 diverge toward the substrate 4 and the bondcoat 10. The openings of the slots 44 may be spaced a distance s1 from about 20 to 40 mils (.5 to 1 mm) and the exits of the slots 44 may be spaced a distance s2 from about 20 to 40 mils. As disclosed above, the slots 44 provided in the mask 44 may be periodic and/or continuous, or may be non-periodic and/or non-continuous. As also discussed above, the slots 44 may intersect to provide the engineered surfaces as sets of intersecting surfaces.

The masks were formed by scanning a micro waterjet across a mask substrate formed of, for example, metal (e.g. HASTALLOY®), having a thickness of about 60 mils (1.5 mm) or about 120 mils (about 3 mm), to form the slots 44. The slots 44 formed by scanning the micro waterjet have a tapered profile, as shown for example in FIGS. 7 and 8. It should be appreciated, however, that slots 44 having generally straight (i.e. generally parallel) edges may be formed, by example by laser machining the mask substrate. The slots 44 may have a nominal width of about 20 mils (0.5 mm) at their narrowest portion.

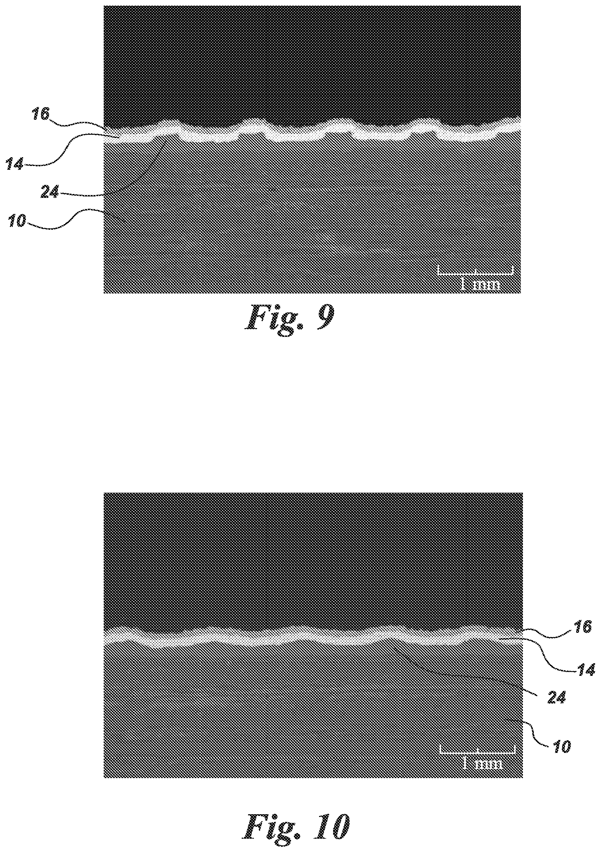

Referring to FIGS. 9-18, each sample shown was formed by applying a 4 to5 mils (1 to 1.25 mm) bondcoat of SG-100 Si on a SiC-SiC ceramic matrix composite substrate. The mask was spaced about 5 mils (1.25 mm) from the sample and the engineered surfaces 24 were formed on the bondcoat by APS through the mask. The engineered surfaces applied were about 2 mils (0.05 mm). The mask was removed and additional layers 14, 16 of YbYDS and BSAS, respectively, of about 4 mils (0.1 mm) were applied.

Referring to FIG. 9, the engineered surfaces 24 were formed in the bondcoat 10 by using a mask having converging slots, for example as shown in FIG. 7. The distance s2 between the slot exits was 20 mils and the mask had a thickness of 60 mils. Referring to FIG. 10, the engineered surfaces were formed in the bondcoat 10 using a mask having diverging slots, for example as shown in FIG. 8. The distance s2 between the slot exits was 20 mils and the mask thickness was 60 mils. As shown in FIG. 9, the engineered surfaces 24 formed through a mask having converging slots exhibit a generally rectangular profile whereas as shown in FIG. 10 the engineered surfaces 24 formed through a mask having diverging slots exhibit a more rounded, wave-like profile. The generally rounded, wave-like engineered surfaces shown in FIG. 10 exhibit lower stress concentrations than the generally rectangular engineered surfaces shown in FIG. 9, but may provide less creep resistance to the EBC system.

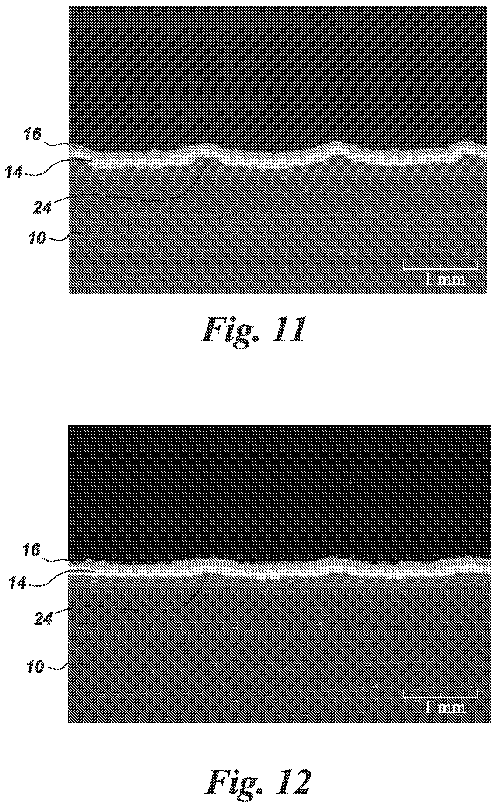

Referring to FIG. 11, the engineered surfaces 24 were formed in the bondcoat 10 using a mask having converging slots, for example as shown in FIG. 7. The distance between the mask slot exits was about 40 mils (1 mm) and the mask had a thickness of about 60 mils (1.5 mm). As shown in FIG. 11, the engineered surfaces have a generally trapezoidal shape. The trapezoidal shape of FIG. 11 is generally between the generally rectangular shape of FIG. 9 and the generally rounded, wave-like shape of FIG. 10. The generally trapezoidal engineered surfaces thus exhibit lower stress concentration than the generally rectangular surfaces with improved creep resistance to the generally rounded, wave-like surfaces.

Referring to FIG. 12, the engineered surfaces 24 were formed on the bondcoat 10 using a mask having diverging slots, for example as shown on FIG. 8, similar to the engineered surfaces shown in FIG. 10. The mask had a thickness of about 60 mils and the exits of the mask slots were spaced about 40 mils. The engineered surfaces of FIG. 12 thus have a longer wavelength than the engineered surfaces of FIG. 10.

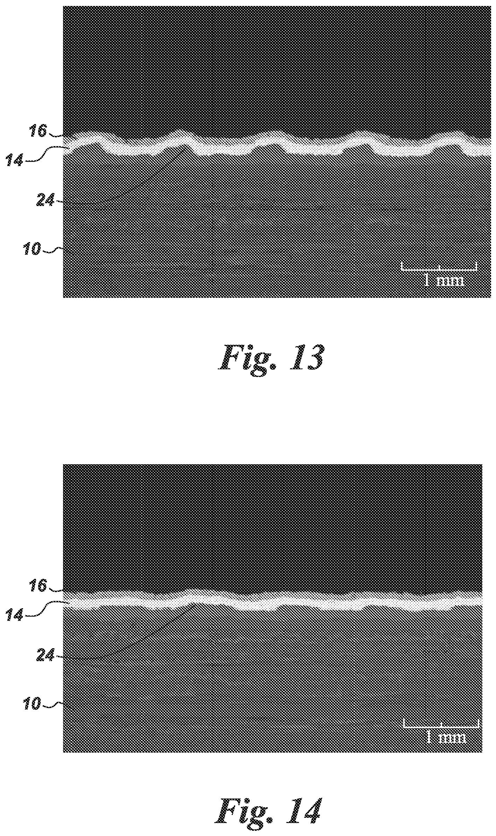

Referring to FIG. 13, the engineered surfaces 24 were formed in the bondcoat 10 through a mask having converging slots, for example as shown in FIG. 7. The distance between the mask slot exits was 20 mils and the mask had a thickness of 120 mils (3 mm). The engineered surfaces 24 have a generally trapezoidal shape similar to the surfaces of FIG. 11. As the distance between the mask slot exits is the same as in FIG. 9, the engineered surfaces 24 in FIG. 13 have a wavelength similar to the surfaces in FIG. 9.

The engineered surfaces shown in FIG. 14 were formed through a mask having diverging slots, for example as shown in FIG. 8. The mask slot exits were spaced 20 mils and the mask thickness was 120 mils. The surfaces 24 have a generally rounded, wave-like shape, similar to those shown in FIG. 10 and 12, with a wavelength similar to those shown in FIG. 10.

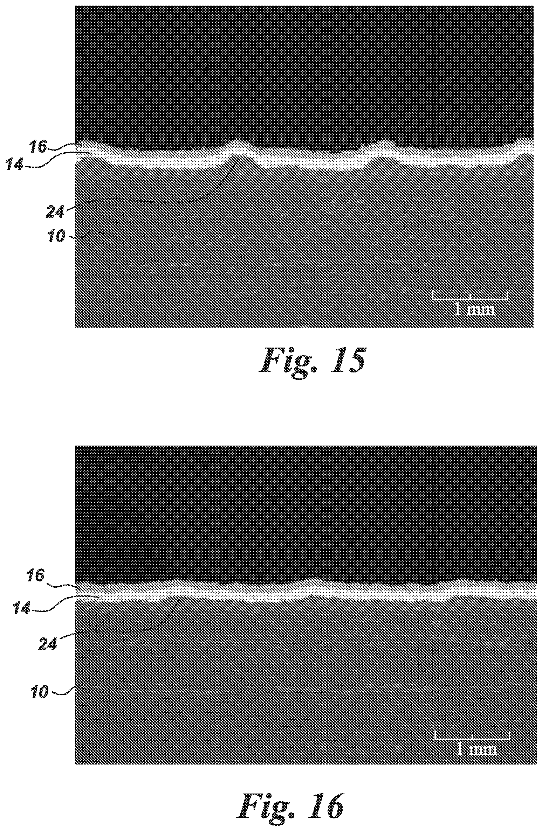

The engineered surfaces of FIG. 15 were formed with a mask having converging slots, for example as shown in FIG. 7. The slot exits were spaced about 40 mils (1 mm) and the mask had a thickness of about 120 mils. The surfaces 24 have a generally trapezoidal shape with corners that are more rounded than, for example, the generally trapezoidal surfaces of FIG. 11. The engineered surfaces of FIG. 16 were formed through a mask having diverging slots, for example as shown in FIG. 8. The slot spacing and mask thickness were the same as described with respect to FIG. 15.

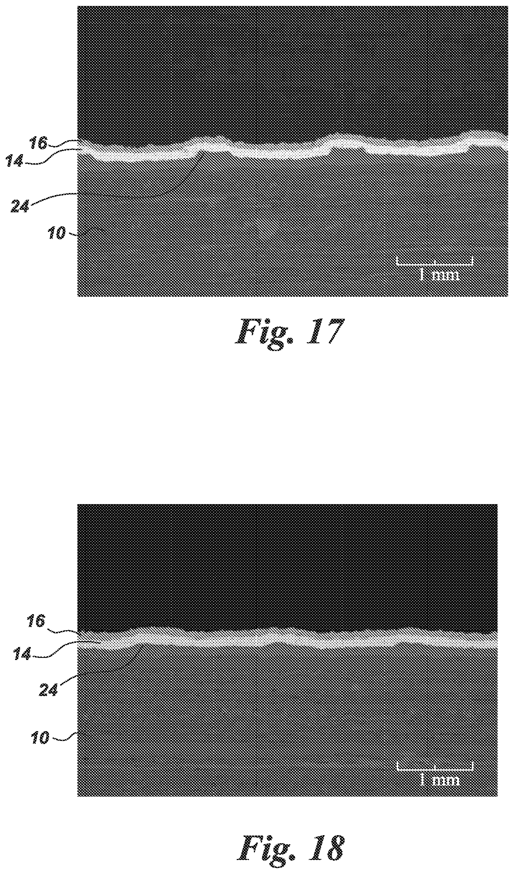

Referring to FIG. 17, the mask used to form the engineered surface had the same slot spacing and mask thickness as the mask used to form the engineered surfaces of FIGS. 15. The micro-waterjet scan speed across the mask substrate used to produce mask for the engineered surfaces of FIG. 17 was lower than the scan speed of the micro-waterjet used to form the mask used to form the engineered surfaces of FIG. 15. As shown in FIG. 17, the corners or edges of the generally trapezoidal surfaces 24 are less rounded using the lower scan speed of the micro-waterjet to form the mask slots. Similarly, the engineered surfaces of FIG. 18 were formed through a mask of the same dimensions and diverging mask slots as that of FIG. 16, but with a lower scan speed of the micro-waterjet to form the mask slots. The surfaces of FIG. 18 have a generally more rounded shape than the surfaces shown in FIG. 16.

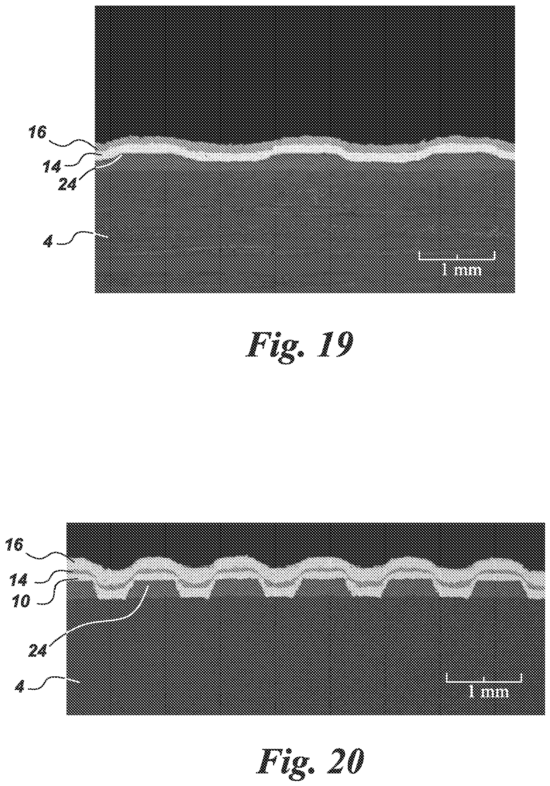

Referring to FIG. 19, the engineered surfaces 24 were formed by spraying silicon onto the bondcoat using a direct write torch.

Referring to FIG. 20, the engineered surfaces 24 were formed by laser machining grooves into a ceramic composite matrix substrate. The bondcoat 10 and layers 14, 16 of an EBC system were provided over the substrate 4.

It is to be understood that not necessarily all such objects or advantages described above may be achieved in accordance with any particular example. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the present technology have been illustrated and described herein, many modifications and changes will occur to those skilled in the art. It is, therefore, to be understood that the appended claims are intended to cover all such modifications and changes.

## Claims

1. A method of forming an article with an environmental barrier coating (EBC) system, the method comprising:
forming a silicon-containing layer (10) on a silicon-containing region of a surface of a substrate (4) of the article;
forming a plurality of channels and ridges (24) in the silicon-containing layer (10) by adding silicon-containing material to the silicon-containing layer (10) or by removing portions of the silicon-containing layer (10); and
forming at least one outer layer (14,16) overlying the surface of the silicon-containing layer (10),
wherein adding silicon-containing material to the silicon-containing layer comprises spraying the silicon-containing material through a mask (36) onto the silicon-containing layer (10); and
wherein the mask (36) comprises slots (44) that taper in a converging direction toward the article.

2. The method according to claim 1, wherein the mask (36) is spaced 0.127 mm (5 mils) from the silicon-containing layer (10).

3. The method according to claim 1, wherein the silicon-containing layer (10) comprises elemental silicon, silicon carbide, silicon nitride, metal silicides, silicon alloys, or mixtures thereof.

4. The method according to claim 3, wherein the silicon-containing layer (10) further comprises oxide phases, rare earth silicates, rare earth aluminosilicates, alkaline earth aluminosilicates or mixtures thereof.

5. The method according to claim 1, wherein the particles comprise silicon carbide particles, or alumina particles.

6. The method according to claim 1, wherein the silicon-containing region is a substrate of the article and contains silicon carbide, silicon nitride, a silicide and/or silicon as a reinforcement phase and/or a matrix phase.

7. The method according to claim 6, wherein the substrate is a ceramic matrix composite material containing silicon carbide as a reinforcement phase and/or a matrix phase.

8. The method according to claim 6, wherein the silicide is a refractory metal silicide or a transition metal silicide.

## Patentansprüche

1. Verfahren zum Bilden eines Erzeugnisses mit einem Umweltsperrbeschichtungs*(environmental barrier coating,* EBC)-System, wobei das Verfahren Folgendes umfasst:
Ausbilden einer siliciumhaltigen Schicht (10) auf einem siliciumhaltigen Bereich einer Oberfläche eines Substrats (4) des Erzeugnisses;
Ausbilden mehrerer Kanäle und Stege (24) in der siliciumhaltigen Schicht (10) durch Hinzufügen von siliciumhaltigem Material zu der siliciumhaltigen Schicht (10) oder durch Entfernen von Teilen der siliciumhaltigen Schicht (10); und
Ausbilden mindestens einer äußeren Schicht (14, 16), die über der Oberfläche der siliciumhaltigen Schicht (10) liegt, wobei das Hinzufügen von siliciumhaltigem Material zu der siliciumhaltigen Schicht das Aufsprühen des siliciumhaltigen Materials durch eine Schablone (36) auf die siliciumhaltige Schicht (10) umfasst; und
wobei die Schablone (36) Schlitze (44) aufweist, die sich in einer konvergierenden Richtung zum Erzeugnis hin verjüngen.

2. Verfahren nach Anspruch 1, wobei die Schablone (36) einen Abstand von 0,127 mm (5 mils) von der siliciumhaltigen Schicht (10) hat.

3. Verfahren nach Anspruch 1, wobei die siliciumhaltige Schicht (10) elementares Silicium, Siliciumcarbid, Siliciumnitrid, Metallsilicide, Siliciumlegierungen oder Mischungen davon umfasst.

4. Verfahren nach Anspruch 3, wobei die siliciumhaltige Schicht (10) ferner Oxidphasen, Seltenerdsilikate, Seltenerd-Alumosilikate, Erdalkali-Aluminosilikate oder Mischungen davon umfasst.

5. Verfahren nach Anspruch 1, wobei die Teilchen Siliciumcarbidteilchen oder Aluminiumoxidteilchen umfassen.

6. Verfahren nach Anspruch 1, wobei der siliziumhaltige Bereich ein Substrat des Erzeugnisses ist und Siliziumcarbid, Siliziumnitrid, ein Silizid und/oder Silizium als Verstärkungsphase und/oder als Matrixphase enthält.

7. Verfahren nach Anspruch 6, wobei das Substrat ein keramischer Matrixverbundwerkstoff ist, der Siliciumcarbid als Verstärkungsphase und/oder als Matrixphase enthält.

8. Verfahren nach Anspruch 6, wobei das Silicid ein Silicid eines hochschmelzenden Metalls oder ein Übergangsmetallsilicid ist.

## Revendications

1. Procédé de formation d'un article comportant un système de revêtement barrière environnemental (EBC), le procédé comprenant :
la formation d'une couche contenant du silicium (10) sur une région contenant du silicium d'une surface d'un substrat (4) de l'article ;
la formation d'une pluralité de canaux et de nervures (24) dans la couche contenant du silicium (10) en ajoutant un matériau contenant du silicium à la couche contenant du silicium (10) ou en retirant des parties de la couche contenant du silicium (10) ; et
la formation d'au moins une couche externe (14, 16) recouvrant la surface de la couche contenant du silicium (10), dans lequel l'ajout d'un matériau contenant du silicium à la couche contenant du silicium comprend la pulvérisation du matériau contenant du silicium à travers un masque (36) sur la couche contenant du silicium (10) ; et
dans lequel le masque (36) comprend des fentes (44) qui se rétrécissent dans une direction convergente vers l'article.

2. Procédé selon la revendication 1, dans lequel le masque (36) est espacé de 0,127 mm (5 mils) de la couche contenant du silicium (10).

3. Procédé selon la revendication 1, dans lequel la couche contenant du silicium (10) comprend du silicium élémentaire, du carbure de silicium, du nitrure de silicium, des siliciures métalliques, des alliages de silicium ou leurs mélanges.

4. Procédé selon la revendication 3, dans lequel la couche contenant du silicium (10) comprend en outre des phases d'oxyde, des silicates de terres rares, des aluminosilicates de terres rares, des aluminosilicates alcalino-terreux ou leurs mélanges.

5. Procédé selon la revendication 1, dans lequel les particules comprennent des particules de carbure de silicium ou des particules d'oxyde d'aluminium.

6. Procédé selon la revendication 1, dans lequel la région contenant du silicium est un substrat de l'article et contient du carbure de silicium, du nitrure de silicium, un siliciure et/ou du silicium comme phase de renforcement et/ou une phase de matrice.

7. Procédé selon la revendication 6, dans lequel le substrat est un matériau composite à matrice céramique contenant du carbure de silicium comme phase de renforcement et/ou une phase de matrice.

8. Procédé selon la revendication 6, dans lequel le siliciure est un siliciure de métal réfractaire ou un siliciure de métal de transition.
